# EUROPÄISCHE PATENTANMELDUNG

(11) **EP 1 457 426 A1**
(43) Veröffentlichungstag der Anmeldung: **15.09.2004**
(21) Anmeldenummer: 04001301.3
(22) Anmeldetag: 22.01.2004
(51) Int. Cl.: B65D 21/06, B65D 43/16

(54) **Lager- und Transportbehälter bzw. -kasten**

(30) Priorität: 08.03.2003 DE 20303708 U
(71) Anmelder: Fritz Schäfer GmbH, D-57290 Neunkirchen (DE)
(72) Erfinder: Schäfer, Gerhard, 57290 Neunkirchen (DE)
(74) Vertreter: Valentin, Ekkehard

(57) **Zusammenfassung**

Bei einem Lager- und Transportbehälter bzw. -kasten (1), der mit zwei einander gegenüberliegenden, scharniergelenkartig gelagerten Deckelhälften (6 a, 6 b) verschließbar ist, deren freie Ränder sich entlang der Verschlußlinie der Deckelhälften mit mindestens einem Deckelvorsprung (7 a, 7 b) überlappen, und die an ihren von der Anschamierung entfernten Eckbereichen mit ineinandergreifenden Rastmitteln versehen sind, sind Eckverriegelungen (10) als einerseits Zungen (11) an der einen Deckelhälfte (6a bzw. 6b) und andererseits Durchbrechungen (12) der anderen Deckelhälfte (6a bzw. 6b) ausgebildet, in die die Zungen (11) durchtauchend eingreifen.

## Beschreibung

Die Erfindung betrifft einen Lager- und Transportbehälter bzw. -kasten, der mit zwei einander gegenüberliegenden, scharniergelenkartig gelagerten Deckelhälften verschließbar ist, deren freie Ränder sich entlang der Verschlußlinie der Deckelhälften mit mindestens einem Deckelvorsprung überlappen, und die an ihren Eckbereichen mit ineinander greifenden Rastmitteln versehen sind.

Ein solcher Kasten ist durch die EP 0 088 224 B1 bekanntgeworden. In einer ersten Ausführung mit jeweils einem überlappenden Deckelvorsprung besitzt er eine gerade verlaufende und in einer anderen Ausführung mit mehreren überlappenden Deckelvorsprüngen besitzt er eine wellenförmige Verschlußlinie. Die Überlappungsabschnitte sind dort in jedem Fall so ausgebildet, daß an der einen Deckelhälfte innenseitige quer- und längsverlaufende Stege in der Verschlußlage blockartige Erhebungen an der Oberseite der anderen Deckelhälfte einrahmen. Diese Steg- und Blockbewehrungen sollen eine relative Seitwärtsbewegung begrenzen, wenn die Deckelhälften den Kasten verschließen und bei Übereinanderstapelung von Behältem mit Inhaltsgut deren Gewicht auf den bzw. die unteren Kästen lastet. Eine weitere Unterstützung der Verschlußlage findet dieser Kasten dadurch, daß auch die Eckbereiche der Deckelhälften einander überlappen und dort mit nach unten vorspringenden Erhöhungen in diesen zugewandten Vertiefungen einrasten.

Diese Verschlußtechnik ist allerdings sehr aufwendig und setzt bei der Nutzung der Kästen zum Verschließen der Deckelhälften eine exakte Deckungslage der einrahmenden Stege in Bezug auf die blockartigen Erhebungen voraus, was eine exakte und damit teure Fertigung erfordert. Außerdem läßt sich ein Abgleiten der Eckkonturen nicht ausschließen. Das führt dazu, daß Verschiebungen möglich sind, die die tragende Funktion des Deckels beeinträchtigen.

Der Erfindung liegt daher die Aufgabe zugrunde, einen gattungsgemäßen Lagerund Transportbehälter bzw. -kasten mit verbesserter Funktion des Deckelhälften-Verschlusses, insbesondere in den Eckbereichen der Deckelhälften, zu schaffen.

Diese Aufgabe wird erfindungsgemäß dadurch gelöst, daß Eckverriegelungen als einerseits Zungen an der einen Hälfte und andererseits Durchbrechungen der anderen Deckelhälfte ausgebildet sind, in die die Zungen durchtauchend eingreifen. Die in der Verschlußlage in den Durchbrechungen erfindungsgemäß durchtauchend angeordneten, d.h. sich mit ihren freien Enden über die Durchbrechungen nach vorne hinaus erstreckenden Zungen verhindern sicher ein Abgleiten der formschlüssigen Eckverriegelungen. Die Ecken der Deckelhälften können nicht mehr übereinander rutschen, so daß die tragende Funktion unverändert aufrechterhalten wird. Diese auch unter Last erreichte Deckelstabilität bringt eine wesentliche Tragkrafterhöhung mit sich.

Eine vorteilhafte Ausgestaltung der Erfindung sieht vor, daß jede Deckelhälfte eine Zunge und eine Ausnehmung aufweist, wobei die Zungen und Ausnehmungen vorteilhaft rechteckig sind. Alternativ ist aber auch ein runder Querschnitt möglich, denn die mit Überlänge die Durchbrechungen durchtauchenden Zungen sind stets daran gehindert, unter Last aus den Durchbrechungen herauszugleiten. Das wird noch dadurch weiter erschwert, daß nicht die eine Deckelhälfte zwei Zungen und die andere Deckelhälfte die gegenüberliegenden beiden Durchbrechungen aufweist, sondem die Zunge bzw. die Durchbrechung der einen Deckelhälfte jeweils diagonal zur Zunge bzw. Durchbrechung der anderen Deckelhälfte vorgesehen ist.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Figur 1: in der Draufsicht einen Kasten mit geöffnetem Deckel, d.h. nach außen verschwenkten Deckelhälften;
- Figur 2: als Einzelheit der Deckelhälften die in Figur 1 mit "X" strichpunktiert eingekreisten Deckel-Eckbereiche;
- Figur 3: als perspektivische Teilansicht einander gegenüberliegende Eckbereiche der Deckelhälften nach Figur 1 in einer Zwischenposition auf ihrem Weg in die eingeschwenkte Verschlußlage;
- Figur 4: als Einzelheit von der Unterseite der Deckelhälften her gesehen den Eckbereich nach Figur 3 in der Verriegelungsstellung; und
- Figur 5: in perspektivischer Draufsicht den durch die Deckelhälften verschlossenen Behälter.

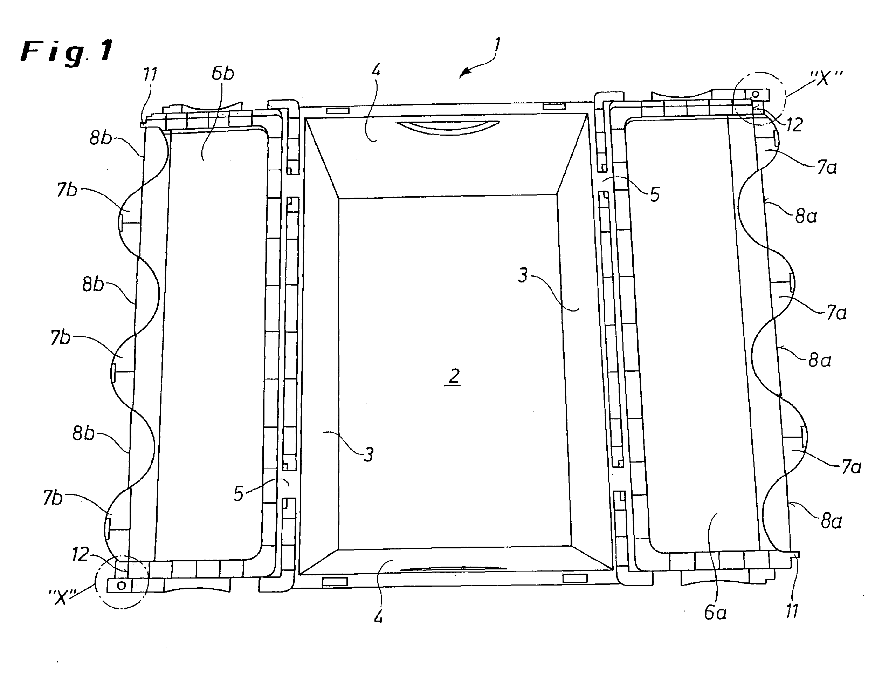

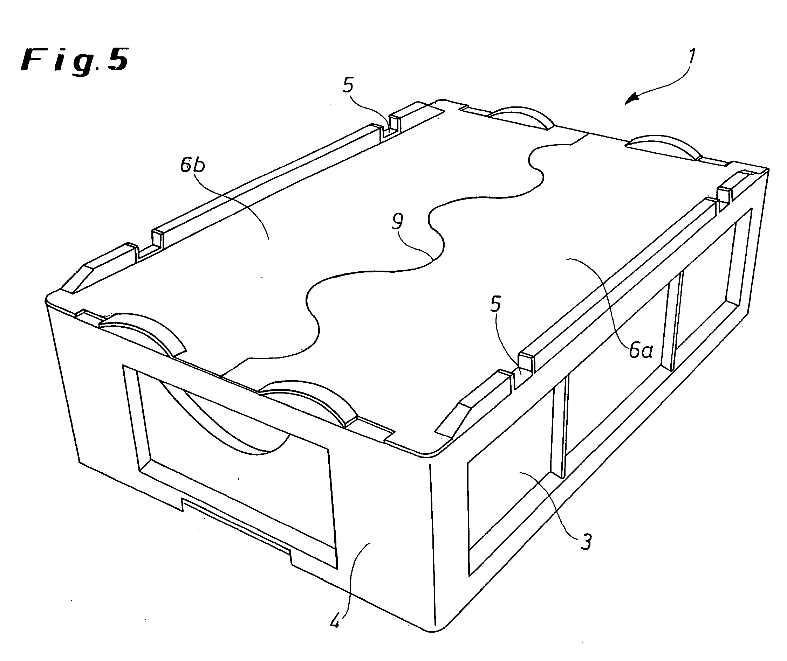

Ein im Ausführungsbeispiel dargestellter Lager- und Transportbehälter bzw. - kasten 1 - im folgenden Kasten genannt - weist eine im wesentlichen rechteckige Bauform mit einem innen ebenen Boden 2, zwei rechtwinklig davon hochragenden Längswänden 3 sowie zwei ebenfalls rechtwinklig hochragenden Querwänden 4 auf. Statt in der starren Bauweise, könnten die Längs- und Querwände auch zusammenlegbar bzw. -faltbar sein. An den oberen Enden der Längswände 3 sind in Scharnieren 5 zwei Deckelhälften 6a bzw. 6b schwenkbeweglich gelagert. Der Kasten 1 mit geöffneten, nach außen verschwenkten Deckelhälften 6a zw. 6b ist der Figur 1 und die Verschlußlage der Deckelhälften 6a bzw. 6b ist der Figur 5 zu entnehmen.

Die Deckelhälften 6a bzw. 6b sind an ihren freien Rändern mit teilkreisförmigen Deckelvorsprüngen 7a bzw. 7b versehen, denen in der jeweils gegenüberliegenden Deckelhälfte in deren Oberfläche formangepaßte Vertiefungen 8a bzw. 8b zugeordnet sind. In der Verschlußlage überlappen sich die Deckelhälften 6a bzw. 6b mit ihren Deckelvorsprüngen 7a, 7b, die von den entsprechenden Vertiefungen 8a bzw. 8b der jeweils anderen Deckelhälfte aufgenommen werden. Aufgrund der Konturgebung der Deckelvorsprünge 7a bzw. 7b entsteht in der geschlossenen Lage eine wellenförmige Verschlußlinie 9 (vgl. Figur 5).

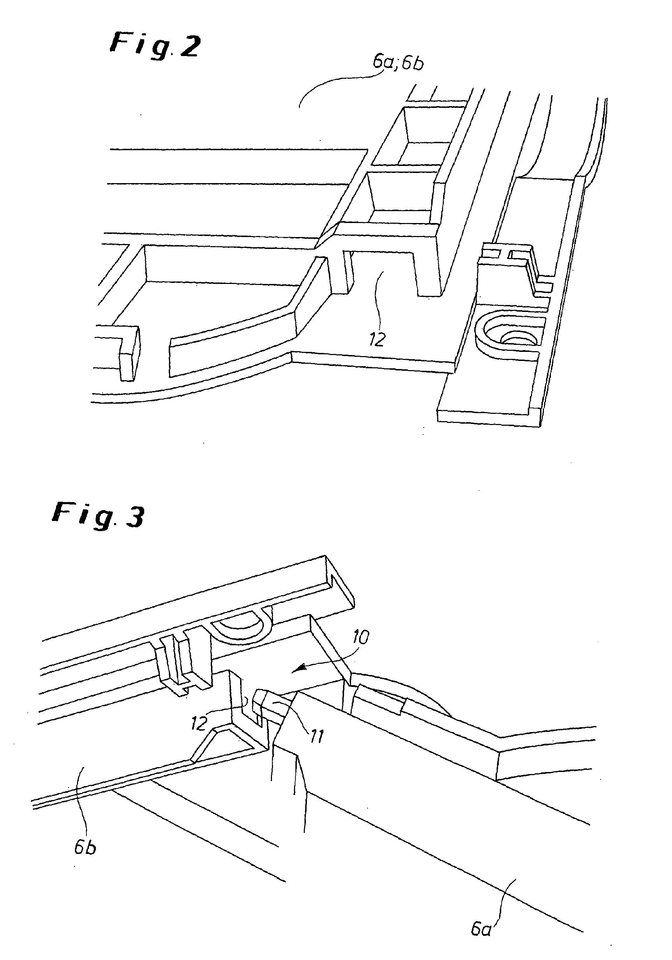

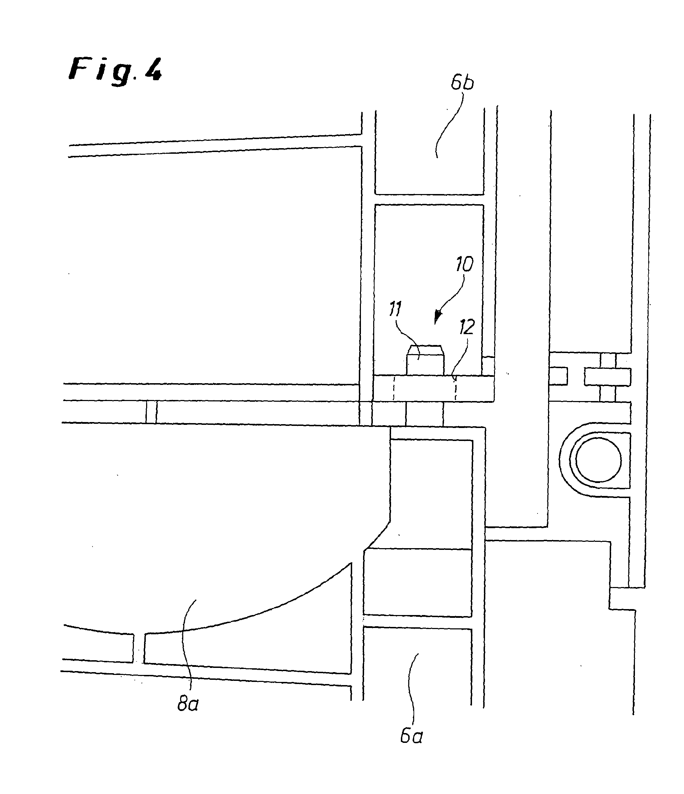

Die Deckelhälften 6a bzw. 6b sind an ihren von der Anscharnierung entfernten Ecken mit Eckverriegelungen 10 (vgl. die Figuren 3 und 4) ausgebildet. Diese bestehen jeweils aus einer Zunge 11 der einen Deckelhälfte 6a bzw. 6b und einer in Figur 2 als Einzelheit gezeigten Durchbrechung 12 der jeweils anderen Deckelhälfte 6a bzw. 6b. Der Zunge 11 der Deckelhälfte 6a liegt die Zunge 11 der Dekkelhälfte 6b diagonal gegenüber, wie folglich auch die Durchbrechungen 12 (vgl. Figur 1).

Beim Verschwenken der Deckelhälften 6a bzw. 6b aus der in Figur 1 gezeigten geöffneten Stellung in die Verschlußlage nach Figur 5 nähern sich die Zungen 11 zunehmend den komplementären Durchbrechungen 12 an, wie in Figur 3 dargestellt, bis sie letztendlich die Durchbrechungen 12 mit einer solchen Überlänge (vgl. Figur 4) durchtauchen, daß sie auch bei großer Belastung, wie im Falle von übereinandergestapelten Kästen 1 mit Inhaltsgut, formschlüssig bleiben und ein Verschieben der Deckelhälften 6a, 6b in ihren Eckbereichen sicher verhindern.

## Patentansprüche

1. Lager- und Transportbehälter bzw. -kasten (1), der mit zwei einander gegenüberliegenden, scharniergelenkartig gelagerten Deckelhälften (6 a, 6 b) verschließbar ist, deren freie Ränder sich entlang der Verschlußlinie (9) der Deckelhälften mit mindestens einem Deckelvorsprung (7 a, 7 b) überlappen, und die an ihren von der Anschamierung entfernten Eckbereichen mit ineinandergreifenden Rastmitteln versehen sind,
**dadurch gekennzeichnet,**
**daß** Eckverriegelungen (10) als einerseits Zungen (11) an der einen Dekkelhälfte (6a bzw. 6b) und andererseits Durchbrechungen (12) der anderen Deckelhälfte (6a bzw. 6b) ausgebildet sind, in die die Zungen (11) durchtauchend eingreifen.

2. Kasten nach Anspruch 1,
**dadurch gekennzeichnet,**
**daß** an jeder Deckelhälfte (6a bzw. 6b) eine Zunge (11) und eine Durchbrechung (12) vorgesehen ist.

3. Kasten nach Anspruch 1 oder 2,
**gekennzeichnet durch**
im Querschnitt rechteckige Zungen (11) und rechteckige Durchbrechungen (12).
